# EUROPÄISCHE PATENTSCHRIFT

(11) **EP 1 252 005 B1**
(45) Veröffentlichungstag und Bekanntmachung des Hinweises auf die Patenterteilung: **10.12.2003**
(21) Anmeldenummer: 01909651.0
(22) Anmeldetag: 18.01.2001
(51) Int. Cl.: B29C 31/00

(54) **INJEKTIONSDÜSE FÜR MISCHKÖPFE VON REAKTIONSGIESSMASCHINEN**
INJECTION NOZZLE FOR MIXING HEADS OF REACTION CASTING MACHINES
BUSE D'INJECTION POUR TETES DE MELANGE DE MACHINES DE MOULAGE PAR REACTION

(30) Priorität: 20.01.2000 DE 10002246
(43) Veröffentlichungstag der Anmeldung: 30.10.2002
(73) Patentinhaber: Krauss-Maffei Kunststofftechnik GmbH, 80997 München (DE)
(72) Erfinder: SÖCHTIG, Wolfgang, 82110 Germering (DE)
(74) Vertreter: Zollner, Richard
(86) Internationale Anmeldenummer: EP0100546
(87) Internationale Veröffentlichungsnummer: WO01053056

(56) Entgegenhaltungen:
- EP-A- 0 025 871
- EP-A- 0 070 486
- EP-A- 0 206 073
- EP-A- 0 374 300
- EP-A- 0 504 874
- DE-A- 2 814 688
- DE-A- 3 021 095
- JP-A- 3 104 613
- US-A- 1 735 718
- US-A- 4 141 470
- US-A- 4 368 847
- US-A- 4 378 335
- US-A- 4 474 310
- US-A- 4 966 466
- US-A- 5 443 797

## Beschreibung

Die Erfindung betrifft eine Injektionsdüse für Mischköpfe von Reaktionsgießmaschinen. Bei der Herstellung von Formteilen nach dem Reaktionsgießverfahren werden zwei oder mehr flüssige, reaktionsfähige Komponenten miteinander vermischt, wodurch eine chemische Reaktion abläuft und ein Kunststoff entsteht, der sich in einem Formwerkzeug zu einem Formteil verfestigt. Häufig verbreitet ist die Herstellung von Polyurethan-Formteilen aus den Komponenten Polyol und Isocyanat. Bei der Herstellung derartiger Formteile mittels Hochdruck-Injektionsvermischung werden die Komponenten mittels Injektionsdüsen vorzugsweise gegeneinander in die sogenannte Mischkammer injiziert, wo sie sich aufgrund der kinetischen Energie, aber auch durch die im kleinen Mischraum entstehenden Turbulenzen vermischen. Verschiedene Mischköpfe sind aus dem Stand der Technik bekannt (Johannaber, Kunststoffmaschinenführer, 3. Auflage, 1992, Seiten 567 - 571). Allen Mischköpfen gemeinsam ist die Verwendung von Injektionsdüsen für die Zufuhr der Komponenten in den Mischraum.

Zum Einstellen eines Verdüsungsdrucks (Injektionsdruck) ist es bekannt, die Position der Düsennadel und damit den Drosselspalt mittels eines Federelements einzustellen. Dabei wird die Düsennadel über das Federelement mit einer über die Federvorspannung einstellbaren Kraft beaufschlagt, die dem Druck der über diese Injektionsdüse zugeführten Komponente entgegenwirkt.

In einigen Anwendungsfällen ist es notwendig oder wünschenswert, die Dosiermenge einer oder beider Reaktionskomponenten von Formteil zu Formteil, oder eventuell auch während der Herstellung eines Formteils, zu verstellen. Wenn beispielsweise zunächst eine kleines Formteil mit einer geringen Austragsleistung hergestellt wird und anschließend ein deutlich größeres Formteil, ist es wünschenswert, das größere Formteil mit einer höheren Austragsleistung herzustellen, was eine entsprechende Vergrößerung des Düsenspalts erfordert. Für eine verminderte Austragsleistung ist der Düsenspalt entsprechend zu verkleinern.

Eine federbelastete Düsennadel ist hierfür insofern nachteilig, als aufgrund der Kennlinie der Feder sich bei unterschiedlichen Drosselspalten nicht exakt die gleichen Komponentendrücke und damit auch nicht exakt die gleichen Verdüsungsdrücke einstellen, was sich negativ auf die Formteilqualität auswirkt. Nachteilig ist bei diesem Stand der Technik weiterhin, dass beim Öffnen des Mischkopfes der Düsenspalt beim Übergang vom Rezirkulationszustand in den Mischzustand kurzzeitig vollständig geschlossen ist, was zu kurzzeitigen Druckstößen auf der Komponentenseite führt und ein Schwingen des federbelasteten Regelsystems erzeugt. Ein weiterer Nachteil ergibt sich daraus, dass sich aufgrund der Reibungsverluste der Feder selbst, sowie zwischen Gehäuse und Feder, eine relativ große Hysterese im Regelverhalten einstellt. Dadurch kann keine exakte Reproduzierbarkeit der Verdüsungsdrücke gewährleistet werden, da keine festen und reproduzierbaren Spaltgrößen bei den Drosselspalten einstellbar sind.

Aus der US 4,378,335 ist eine Vorrichtung für eine Reaktionsgießverfahren bekannt, bei der die Injektionsdüsen für Mischköpfe in einer gattungsgemäßen Art ausgebildet sind. Demgemäß ist in der Injektionsdüse ein einstückig mit einer Düsennadel ausgebildetes Stellorgan vorgesehen, welches zur Einstellung des Einspritzspaltes in verschiedenen Positionen hin und her verfahrbar ist.

Aus der US 5,443,797 ist ein Verfahren und eine Vorrichtung mit der Reaktionsgießtechnik bekannt, um eine bessere Durchmischung herzustellen wird die Mischung, welche in einem Düsenbereich fließt, in zwei Ströme geteilt, die wiederum um einen Kolben strömen und sich auf der gegenüberliegenden Seite des Teilungspunktes wieder verbinden.

Der Erfindung liegt daher die Aufgabe zugrunde, eine weitere Ausführungsform für eine Injektionsdüse für Mischköpfe von Reaktionsgießmaschinen anzugeben, mit der zwei Positionen der Düsennadel und damit auch zwei Drosselspalte definiert und reproduzierbar einstellbar sind.

Die Lösung dieser Aufgabe erfolgt durch eine Injektionsdüse mit den Merkmalen des Patentanspruchs 1. Vorteilhafte Ausgestaltungen und Weiterentwicklungen finden sich in den Unteransprüchen 2 bis 5. Ein Vorteil der Erfindung liegt darin, dass das Prinzip des Gleichgewichts zwischen einer Federkraft und dem Komponentendruck verlassen wird und stattdessen für die Einstellung zweier verschiedener Drosselspalte zwei feste, aber einstellbare Positionen für ein an der Düsennadel der Injektionsdüse anliegendes Stellorgan vorgesehen werden. Zum Verschieben des Stellorgans ist ein Druckmedium, beispielsweise ein Hydrauliköl, vorgesehen. Dies hat den Vorteil, dass die Verstellung des Düsenspalts von einem ersten Drosselspalt auf einen zweiten Drosselspalt innerhalb kürzester Zeit vorgenommen werden kann, so dass die Austragsleistung von Formteil zu Formteil oder auch während der Herstellung eines Formteils schnell und zuverlässig verändert werden kann und dennoch der Komponentendruck konstant bleibt. Die Erfindung sieht ein System aus einer Stellhülse und einem in der Stellhülse verschiebbaren Stellkolben vor, die bei Druckbeaufschlagung relativ zueinander verschoben werden, wobei die Stellhülse von einer ersten einstellbaren Position in eine zweite einstellbare Position verschoben wird. Damit können zwei Drosselspalte S₂ und S₁ exakt und reproduzierbar eingestellt werden.

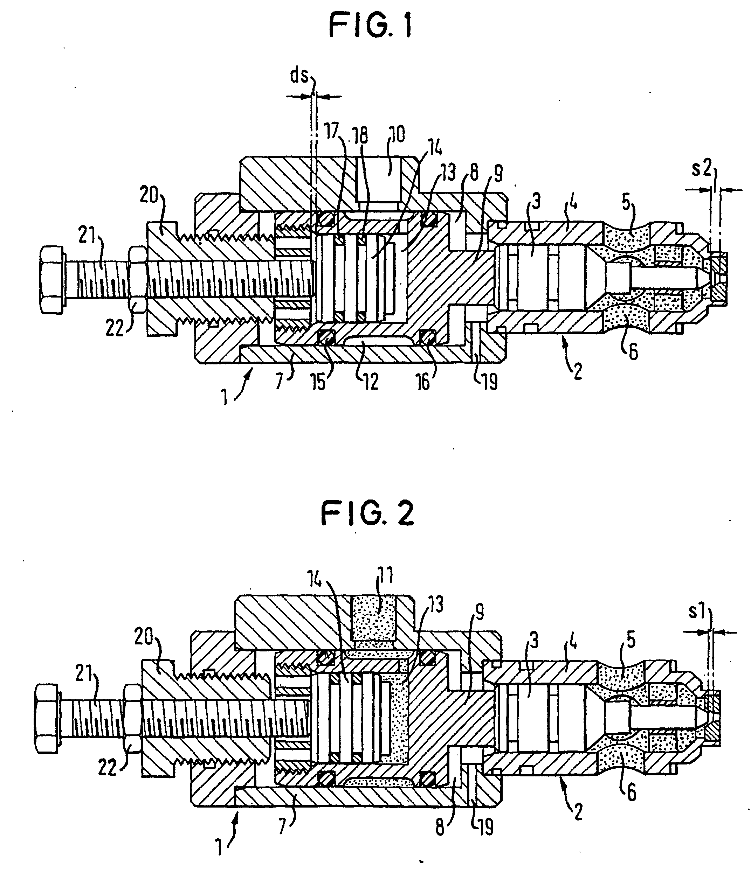

Nachfolgend soll die Erfindung anhand von Ausführungsbeispielen und unter Bezugnahme auf die Fig. 1 und 2 näher erläutert werden.

Es zeigen
- Fig. 1:: erste Ausführungsform der erfindungsgemäßen Injektionsdüse mit der Stellhülse in der hinteren Position und
- Fig. 2:: erste Ausführungsform der erfindungsgemäßen Injektionsdüse mit der Stellhülse in der vorderen Position.

Gemäß den Fig.1 und 2 weist eine erste Ausführungsform der erfindungsgemäßen Injektionsdüse eine Verstellvorrichtung 1 auf, die an das Düsenteil 2 angeflanscht ist. In dem hier dargestellten Beispiel liegt die Düsennadel 3 in einer Düsennadelführungsbuchse 4, die über zwei Öffnungen 5 und 6 für die Zufuhr einer der Komponenten für das Reaktionsgießen verfügt. Die Verstellvorrichtung 1 weist ein aus mehreren Teilen bestehendes Gehäuse 7 auf, in dessen im wesentlichen zylinderförmigen Innenraum 8 eine Stellhülse 9 verschiebbar ist. Über eine Bohrung 10 in der Gehäuseseitenwand kann ein Druckmedium 11, zum Beispiel ein Hydrauliköl, in einen Ringspalt 12 zwischen der Stellhülse 9 und der Gehäuseinnenwand zugeleitet werden. Innerhalb der Stellhülse 9 ist ein Druckraum 13 und in diesem verschiebbar ein Stellkolben 14 mit Dichtringen 17 und 18 vorgesehen. Der Druckraum 13 steht mit dem Ringspalt 12 in Verbindung, so dass das Hydrauliköl 11 in den Druckraum 13 gelangen kann. Mit Dichtringen 15 und 16 an der Stellhülse 9 wird sichergestellt, dass kein Hydrauliköl aus dem Ringspalt 12 austreten kann. Für den Fall einer unvorhergesehenen Leckage auf Seiten der Verstellvorrichtung (Austritt von Hydrauliköl in Richtung der Düsennadel) oder auf Seiten der Düse (Austritt der Komponente in Richtung der Stellhülse) ist ein Entlüftungskanal 19 vorgesehen, der mit dem Raum zwischen der Stellhülse 9 und der Düsennadel 3 korrespondiert. Eine koaxial zur Düsennadel angeordnete hohlzylindrische Stellschraube 20 mit einem Innen- und einem Außengewinde ist in der hinteren Gehäusewand vorgesehen und bildet den ersten Anschlag für die Stellhülse 9. Ebenfalls koaxial zur Düsennadel und innerhalb der hohlzylindrischen Stellschraube 20 ist eine weitere Stellschraube 21 vorgesehen, die als Anschlag für den Stellkolben 14 dient und die mit einer Kontermutter 22 gesichert wird. Der Sitz der hohlzylindrischen Stellschraube 20 in der hinteren Gehäusewand kann gegebenenfalls ebenfalls mit einer Kontermutter gesichert werden.

Zum Verstellen der Düsennadel bzw. zum Einstellen der beiden Arbeitspunkte und damit der beiden Drosselspalte wird wie folgt vorgegangen.

In der ersten Einstellung gemäß Fig.1 ist der Druckraum 13 in der Stellhülse 9 druckentlastet. Durch den Komponentendruck wird die Düsennadel 3 und mit ihr die Stellhülse 9 solange verschoben, bis die Stellhülse 9 an der hohlzylindrischen Stellschraube 20 anliegt (erste Anschlag). Mit dieser Stellschraube 20 kann somit für den ersten Arbeitspunkt der Drosselspalt s2 eingestellt werden.

Zum Anfahren des zweiten Arbeitspunkts (Fig.2) wird der Druckraum 13 über den Druckölanschluss 10 mit Hydrauliköl 11 beaufschlagt. Da sich der Stellkolben 14 an der Stellschraube 21- abstützt, wird die Stellhülse 9 und damit die Düsennadel 3 gegen den Komponentendruck nach vorne geschoben, bis die Stellhülse 9 an der der Düsennadel abgewandten Seite des Stellkolbens 14 an diesen anstößt (zweiter Anschlag). Damit kann mit der Stellschraube 21 als Anschlag für den Stellkolben 14 und dieser als Anschlag für die Stellhülse 9 gleichzeitig der zweite Anschlag für die Stellhülse 9 und damit der zweite Drosselspalt s2 eingestellt werden.

Der Hauptvorteil dieser Verstellvorrichtung liegt darin, dass die unterschiedlichen Arbeitspunkte fest, das heißt exakt reproduzierbar, angefahren werden können. Auch eine Beeinflussung durch auftretende Störgrößen ist damit ausgeschlossen. Durch die günstige Anordnung der Bauteile der Verstellvorrichtung lässt sich ferner ein sehr kompakter Aufbau erreichen, der nicht mehr Einbauraum erfordert als die bisherige Lösung nach dem Stand der Technik.

Es versteht sich von selbst, dass neben den hier in zylindersymmetrischer Bauweise beschriebenen Ausführungsbeispielen auch mit anderen Geometrien das Ziel der vorliegenden Erfindung erreicht wird, beispielsweise mit einem Stellorgan mit einem quadratischen oder mehreckigen Querschnitt, sofern die sonstigen Bestandteile der Verstellvorrichtung in geeigneter Weise ausgelegt sind und eine geeignete Befestigung der erfindungsgemäßen Verstellvorrichtung an die Düse vorgesehen wird.

## Patentansprüche

1. Injektionsdüse für Mischköpfe von Reaktionsgießmaschinen, wobei ein in einem Gehäuse (7) zwischen zwei einstellbaren Anschlägen verschiebbares und mit einer Düsennadel (3) in Wirkverbindung stehendes Stellorgan (9, 23) vorgesehen ist, **dadurch gekennzeichnet, dass** als Stellorgan eine Stellhülse (9) vorgesehen ist, in der ein Druckraum (13) und ein in dem Druckraum (13) verschiebbarer Stellkolben (14) vorgesehen sind, wobei der Druckraum (13) mit einem Druckmedium (11 ) beaufschlagbar ist, und wobei ein erster Anschlag (20) für die Stellhülse und ein zweiter Anschlag (21) für den Stellkolben vorgesehen sind.

2. Injektionsdüse nach Anspruch 1, **dadurch gekennzeichnet, dass** der erste Anschlag (20) für die Stellhülse (9) parallel zur Düsennadel (3) verschieb- und positionierbar ausgebildet ist und dass der zweite Anschlag (21) für den Stellkolben (14) in dem ersten Anschlag (20) für die Stellhülse (9) verschieb- und positionierbar ausgebildet ist.

3. Injektionsdüse nach Anspruch 2, **dadurch gekennzeichnet, dass** es sich bei dem zweiten Anschlag um eine in dem ersten Anschlag geführte und mit einer Kontermutter (22) gesicherte Stellschraube (21) handelt.

4. Injektionsdüse nach Anspruch 2 oder 3, **dadurch gekennzeichnet, dass** es sich bei dem ersten Anschlag für die Stellhülse (9) um eine hohlzylindrische Stellschraube (20) mit einem Außen- und einem Innengewinde handelt.

5. Injektionsdüse nach einem der Ansprüche 1 bis 4, **dadurch gekennzeichnet, dass** der erste Anschlag (20) für das Stellorgan koaxial zur Düsennadel (3) ausgebildet ist.

## Claims

1. Injection nozzle for mixing heads of reaction casting machines, an adjustment unit (9, 23) which is in operative connection with a nozzle needle (3) and displaceable between two adjustable stops in a housing (7) being provided, **characterised in that** a control sleeve (9) is provided as an adjustment unit, in which a pressure chamber (13) and a control piston (14) which is displaceable in the pressure chamber (13) are provided, the pressure chamber (13) being loadable with a pressure medium (11), and a first stop (20) being provided for the control sleeve and a second stop (21) for the control piston.

2. Injection nozzle according to claim 1, **characterised in that** the first stop (20) for the control sleeve (9) is configured to be displaceable and positionable parallel to the nozzle needle (3) and **in that** the second stop (21) for the control piston (14) is configured to be displaceable and positionable in the first stop (20) for the control sleeve (9).

3. Injection nozzle according to claim 2, **characterised in that** the second stop is an adjusting screw (21) guided in the first stop and secured by a counter nut (22).

4. Injection nozzle according to claim 2 or 3, **characterised in that** the first stop for the control sleeve (9) is a hollow cylindrical adjusting screw (20) with an external and an internal thread.

5. Injection nozzle according to any one of claims 1 to 4, **characterised in that** the first stop (20) for the adjustment unit is designed coaxially to the nozzle needle (3).

## Revendications

1. Buse d'injection pour têtes mélangeuses dans des machines pour moulage réactif, un organe de réglage (9, 23), mobile entre deux butées réglables et en liaison active avec une aiguille d'injecteur (3), étant prévu dans un carter (7), **caractérisée en ce que**, pour former l'organe de réglage, il est prévu une douille de réglage (9), dans laquelle sont prévus une chambre de pression (13) et un piston de réglage (14) mobile dans la chambre de pression (13), la chambre de pression (13) pouvant être sollicitée par un milieu sous pression (11), et il est prévu une première butée (20) pour la douille de réglage et une deuxième butée (21) pour le piston de réglage.

2. Buse d'injection selon la revendication 1, **caractérisée en ce que** la première butée (20) pour la douille de réglage (9) est conçue pour pouvoir se déplacer et être positionnée parallèlement à l'aiguille d'injecteur (3) et **en ce que** la deuxième butée (21) pour le piston de réglage (14) est conçue pour pouvoir se déplacer et être positionnée dans la première butée (20) pour la douille de réglage (9).

3. Buse d'injection selon la revendication 2, **caractérisée en ce que** la deuxième butée est une vis de réglage (21) guidée dans la première butée et bloquée par un contre-écrou (22).

4. Buse d'injection selon la revendication 2 ou 3, **caractérisée en ce que** la première butée pour la douille de réglage (9) est une vis de réglage (20) cylindrique creuse avec un filetage extérieur et un filetage intérieur.

5. Buse d'injection selon l'une quelconque des revendications 1 à 4, **caractérisée en ce que** la première butée (20) pour l'organe de réglage est réalisée coaxialement à l'aiguille d'injecteur (3).
